# EUROPEAN PATENT SPECIFICATION

(11) **EP 3 558 744 B1**
(45) Date of publication and mention of the grant of the patent: **13.10.2021**
(21) Application number: 17832072.7
(22) Date of filing: 22.12.2017
(51) Int. Cl.: B60L 50/50

(54) **HYBRID DRIVE SYSTEM FOR A TRACTION VEHICLE**
HYBRIDANTRIEBSSYSTEM FÜR EIN TRIEBFAHRZEUG
SYSTÈME DE COMMANDE HYBRIDE POUR VÉHICULE DE TRACTION

(30) Priority: 22.12.2016 EP 16206251
(43) Date of publication of application: 30.10.2019
(73) Proprietor: ABB Schweiz AG, 5400 Baden (CH)
(72) Inventor: HUGGENBERGER, Thomas, 5417 Untersiggenthal (CH); EHRLER, Urs, 5412 Gebensdorf (CH)
(74) Representative: Qip Patentanwälte Dr. Kuehn & Partner mbB
(86) International application number: PCT/EP2017/084313
(87) International publication number: WO 2018/115403

(56) References cited:
- EP-A1- 2 884 657
- EP-A2- 2 822 807
- US-A- 5 293 947
- US-A- 5 998 880
- US-A1- 2011 094 841
- US-A1- 2016 152 129

## Description

### FIELD OF THE INVENTION

The invention relates to the field of traction vehicles. In particular, the invention relates to a method for operating a drive system of a traction vehicle, a control system for a drive system of a traction vehicle and to a drive system for a traction vehicle.

### BACKGROUND OF THE INVENTION

Traction vehicles, such as trains and trams, are often driven with power from an external electrical network. Most of the networks provide a one phase AC current. However, there are also networks providing a DC current. Such traction vehicles have a drive system, in which the input current is converted into one or more AC currents, which are supplied to drive motors of the traction vehicle.

Another possibility is that the traction vehicle has an internal diesel generator, in which a diesel motor drives an electrical generator which provides the electrical current for the drive motors. Usually, the generator is adapted for generating a three-phase AC current, which is rectified and then converted into AC currents to be supplied to the drive motors.

For example, US 2012 0 303 237 A1 shows an electric system of a locomotive having a three-phase generator.

It is also possible that a traction vehicle has several power sources. For example, US 2004/0216636 A1 shows a hybrid transport vehicle, which may be supplied from an overhead wire or from an engine. When electric power from the overhead line is used, the engine is stopped.

US 2016/152 129 A1 relates to a hybrid vehicle that has a generator/motor directly connected to a mechanical drive train with a combustion engine and a further generator motor used as a second drive of the vehicle. Both electrical motors may be connected to an external power source. Several power supply modes are disclosed, in which the motors are supplied either by the combustion engine, an on-board energy storage system or the external source of energy.

US 6 023 137 A shows a traction converter with a generator that has one three-phase winding system that supplies several drive motors.

US 2011/094 841 A1 and US 2013/140 121 A1 relate to a mining truck, which has an internal combustion engine that drives a generator, which supplies several drive motors with electrical energy. A common DC link may be supplied with energy from a catenary line.

US 2007/120 520 A1 relates to an electrical motor of an automobile, which has two star-connected windings systems that are interconnected via their star-points.

EP2884657 relates to multiphase generator-conversion systems and methods of mitigating harmonics in such systems.

### DESCRIPTION OF THE INVENTION

It is an objective of the invention to provide a powerful, efficient and comparable small drive system for an electrical vehicle.

This objective is achieved by the subject-matter of the independent claims. Further exemplary embodiments are evident from the dependent claims and the following description.

A first aspect of the invention relates to a method for operating a drive system of a traction vehicle. The method may be automatically performed by a control system of the drive system. A traction vehicle may be any vehicle running on rails, such as a train or a tram. The drive system may be integrated into a locomotive, i.e. a wagon solely intended for driving the traction vehicle, and/or into a passenger wagon.

According to an embodiment of the invention, the drive system comprises a generator, which is driven by a fuel powered motor and which comprises two galvanically separated stator winding systems. The drive system also comprises two converter branches supplied by the generator, wherein each converter branch comprises a generator side inverter supplied by one of the stator winding systems, a DC link and a drive motor side inverter connected to the DC link supplying at least one drive motor. The fuel powered motor may be a combustion motor.

The DC link is directly connectable with an electrical DC network for supplying the vehicle. In other words, the traction vehicle may be a hybrid vehicle that may be powered by external electrical power and/or by the internal fuel powered motor. For example, the positive phase of the electrical DC network may be directly connected to one or more DC links of the drive system. A DC link may comprise one or more DC link capacitors for storing electrical energy.

As will be described in the following, the drive system may be controlled in such a way that it is powered by both the electrical DC network and the fuel powered motor. In this case, a control system may balance the power drawn from the electrical DC network and the power supplied by the fuel powered motor.

According to an embodiment of the invention, the method that may be performed by the control system comprises: determining a reference power to be provided to the at least one drive motor; determining an actual DC network power provided by the DC network; and in the case, the actual DC network power is smaller than the reference power: controlling the fuel powered motor, such that a difference power is provided by the generator: and automatically balancing the power from the fuel powered motor between the two converter branches with the two inductively coupled stator winding systems of the generator, to which the converter branches are connected.

The reference power may be the power that in an optimal situation should be provided to the one or more drive motors. For example, the reference power may be based on a reference speed set by a person steering the traction vehicle.

The actual power of the DC network may be determined by measuring the voltage of the DC network and determining a deviation of the measured voltage from a nominal voltage. The actual power, which is providable by the DC network, may be proportional to the deviation.

The difference between the needed reference power and the providable power may be counterbalanced by the fuel powered motor. The fuel powered motor may be controlled in such a way that it provides substantially the difference power. In such a way, the traction vehicle may be driven by power from the DC network supported by the fuel powered motor.

Furthermore, the power from the fuel powered motor may be automatically balanced between the two converter branches, which comprise the two inductively coupled stator winding systems of the generator, to which the converter branches are connected. The power provided to the different converter branches may have to be controlled. Such control may be substantially simplified, when the different generator side inverters are supplied by galvanically isolated stator winding systems, which are inductively coupled. In such a way, the currents supplied to the different converter branches may be automatically balanced.

The term "automatically balanced" may mean that the power from the motor is balanced between the two converter branches due to the inductive coupling of the stator windings. No further active control by a controller may be necessary for balancing the power transfer from the generator to the converter branches. According to an embodiment of the invention, the method further comprises: determining an actual present power as the sum of the actual DC network power and an actual motor power provided by the fuel powered motor; and controlling the motor side inverter that the actual present power is supplied to the at least one drive motor. It may be that the fuel powered motor reacts slower to a change in its reference power (set to the difference power) than changes in the power provided by the DC network occur. In this case, not the full reference power may be present for the drive motors. However, the drive side inverters may be controlled such that the drive motors are only supplied with the actual present power.

According to an embodiment of the invention, the actual present power is determined based on a DC link voltage and/or an AC voltage provided by the generator. It may be that the actual present power is directly determined by quantities measurable in the electric system after the generator. For example, the power provided by the generator and/or an energy change of the energy stored in the DC link may be used for determining the actual power.

According to an embodiment of the invention, the method further comprises: setting a reference motor power for the fuel powered motor as the difference power, which is the difference between the reference power and the actual DC network power. The fuel powered motor may have a motor controller, which based upon a reference speed or a reference power, controls the fuel powered motor to provide the demanded reference motor power.

According to an embodiment of the invention, the reference power is based on a human controllable speed controller of the traction vehicle. As already mentioned, the reference power in the end may be set by a person steering the traction vehicle.

It may be that the fuel powered motor is stopped, when enough power is provided by the DC network. For example, in the case of a stable DC network, the traction vehicle may be completely powered with electrical power from the DC network.

When power from the fuel powered motor is needed, the fuel powered motor may be started with electrical power from the DC network and/or from the DC link.

According to an embodiment of the invention, the method further comprises: starting the fuel powered motor with the generator, which is supplied with an AC current via the generator side inverter. For example, one or more of the DC links may be charged by the external DC network. The controller of the corresponding inverter then may switch the inverter in such a way that the generator operates in motor mode and power from the DC link is supplied to the generator, which starts to turn and which starts the fuel powered motor. No additional starting device may be needed.

According to an embodiment of the invention, the method further comprises: charging the DC link from the electrical DC network before starting the fuel powered motor. It may be that the DC link is used as an energy storage for the start-up of the fuel powered motor.

A further aspect of the invention relates to a control system for a drive system of a traction vehicle, the control system being adapted for performing the method as described in the above and in the following. It has to be noted that features of the method may be features of the control system, and vice versa.

The control system may comprise one or more controllers or control units, i.e. separate devices. The control system may be based on processors running software for performing the method. However, it also may be possible that the method is implemented at least partially in hardware.

According to an embodiment of the invention, the drive system comprises two controllers, each controller being adapted for controlling one of the generator side inverters. Here and in the following, a controller may refer to a control unit, i.e. a separate device. The control system of the drive system may comprise a separate controller for each generator side inverter. A controller may comprise a processor, a DSP, an FPGA and/or other electronics for performing a control method. The two controllers may substantially be designed equal and/or may run equal software.

According to an embodiment of the invention, the controllers are adapted for synchronizing each other, such that they are adapted for generating synchronized switching signals, which are synchronized below 50 µs, for example below 20 µs. In other words, the two controllers may have internal clocks that are synchronized with each other and that deviate from each other not more than the above mentioned time intervals. It has to be noted that synchronized switching signals do not need to provided equal or nearly equal switching time instants but are generated based on synchronized clocks.

The generator side inverters (and/or the drive motor side inverters) may be switched based on pulse width modulation. Usually, a pulse width modulation method is based on carrier signals, which determine the switching time instants of the inverter. Since the two generator side inverters are galvanically coupled via the stator winding systems, a synchronization of the two independent inverters and/or their carrier signals may be necessary. Due to the switching frequency which may be several 100 Hz, such a synchronization may mean that the carrier signals of the two controllers do at least deviate the above mentioned time intervals from each other.

According to an embodiment of the invention, the controllers are interconnected with a first data communication line adapted for transferring data within 50 µs. For getting a synchronization accuracy of below 50 µs, the data transfer speed should be at least within that accuracy. For example, the two controllers may be interconnected with a fast communication line based on fibre optics.

According to an embodiment of the invention, the controllers are interconnected with a second data communication line adapted for slower data communication as the first data communication line. For transferring other data, i.e. data not needed for synchronization, other communication lines may be used. For example, the second data communication line may be a CAN bus or other bus system.

According to an embodiment of the invention, the controllers are adapted for synchronizing each other as a master controller and a slave controller, wherein the master controller is adapted for evaluating measurement signals from the drive system, determining reference signals for stator voltages and/ stator currents for both stator winding systems and for generating switching signals for its corresponding inverter.

The measurement signals may include the magnitudes and phases of the AC currents produced by the generator, the DC link voltages of both DC links, the speed and/or torque produced by the fuel powered motor, etc.

The reference signals may be reference signals (such as magnitude and phase) for the AC voltages converted by the inverters into the DC voltages of the DC links.

Furthermore, the master controller may generate the switching signals for its inverter, but not for the inverter of the slave controller.

According to an embodiment of the invention, the slave controller is adapted for synchronizing with the master controller, receiving reference signals for the stator voltages and/or stator currents and for generating switching signals for its corresponding inverter. The slave controller need not evaluate measurement signals and/or may not determine reference signals on its own.

According to an embodiment of the invention, each controller is adapted for additionally controlling a corresponding drive motor side inverter. It may be that the controller of a generator side inverter also controls the drive motor side inverter, which is interconnected via one of the DC links with the generator side converter.

According to an embodiment of the invention, the fuel powered motor has a further controller adapted for controlling an output power of the fuel powered motor. The fuel powered motor may have a controller of its own that may be provided with a speed reference signal and/or a power reference signal. Such a reference signal may be provided by the master controller and/or one of the inverter controllers for controlling the output power of the fuel powered motor.

A further aspect of the invention relates to a drive system for a traction vehicle. It has to be noted that features of the method and/or the control system may be features of the drive system, and vice versa.

According to an embodiment of the invention, the drive system comprises a fuel powered motor; a generator driven by the fuel powered motor, the generator being adapted for generating a multi-phase AC current, when driven by the fuel powered motor; a generator side inverter supplied by the generator; a drive motor side inverter supplying at least one drive motor of the traction vehicle; and a DC link interconnecting the generator side inverter and the drive motor side inverter, wherein the DC link is directly connectable with an electrical network for supplying the traction vehicle.

The drive system may comprise one combination of fuel powered motor and generator, which supplies one, two or more generator side inverters with electrical power. The fuel powered motor and the generator may be mechanically interconnected by one shaft.

According to an embodiment of the invention, the drive system comprises a control system as described in the above and in the following. As already mentioned, the control system may have a controller for every converter branch, which controllers may communicate with each other for synchronisation.

According to an embodiment of the invention, the drive system comprises two generator side inverters and the generator has two or more galvanically separated stator winding systems, each stator winding system supplying one of the generator side inverters.

The generator may have a special kind of stator, which comprises separate stator winding systems for each of the generator side inverters. Due to the double winding system, only one generator may be needed for generating the power to be supplied to two inverters. Furthermore, only one fuel powered motor is necessary. Thus, the number of mechanical components and thus the space occupied by the drive system as well as the costs may be reduced.

A stator winding system may be seen as electrical interconnected components of the stator, in which the rotor induces electrical currents, when turning. The rotor of the generator may be mechanically interconnected with above mentioned shaft for connecting the generator with the fuel powered motor. On the other hand, the two stator winding systems are not electrically connected, i.e. are galvanically separated, at least inside the generator.

Each of the stator winding systems may provide a three phase system for the respective inverter. Each stator winding system may be composed of three phase windings.

According to an embodiment of the invention, each stator winding system of the generator has three phases, which are star-connected. The phase windings of each stator winding system may be interconnected at one end and may provide a phase output, to which the respective generator side inverter is connected, at the other end.

In such a way, the drive system may be seen as a double star system. The traction vehicle may have an internal generator powered by a fuel powered motor. The internal generator has a stator with two galvanically separated winding systems, i.e. the galvanically separated stator winding systems, that each supplies a separate inverter.

According to an embodiment of the invention, the two stator winding systems have an electrical angle of 30° with respect to each other. The electrical angle between the stator winding systems may be defined as the phase shift between corresponding phases of the two stator winding systems. In the case of a three-phase system, each stator winding system may be adapted for generating a three-phase current, which three phases that are phase shifted by 120° with respect to each other.

However, also an electrical angle of 60° between the stator winding systems also may be possible. A 30° shift between the two stator winding systems may result in more time instants with zero crossings of the phase currents as in the 60° case, which may result in a better suppression of harmonics.

According to an embodiment of the invention, the drive system comprises two converter branches, each converter branch comprising a generator side inverter, a DC link and one or more drive motor side inverter. Each converter branch may be supplied by the generator, for example via one of the stator winding systems. Only one fuel powered motor and one generator may supply two or more independent DC links. Furthermore, auxiliary converters for heating, battery charging etc. may be interconnected with one or more of the DC links.

Alternatively, the generator side inverters may be coupled to one DC link.

A generator side inverter may be a bridge converter based on parallel connected half-bridges. The generator side inverter may be an active rectifier.

According to an embodiment of the invention, each drive motor side inverter supplies at least one, at least two or more of the drive motors. For each associated drive motor, the respective drive motor side inverter may provide three output phases with the AC current for the respective drive motor or for paralleled drive motors. Also, a motor side inverter may be a bridge converter based on parallel connected half-bridges.

According to an embodiment of the invention, the fuel powered motor is a diesel motor. However, it also may be possible that the fuel powered motor may be supplied with gasoline or gas.

According to an embodiment of the invention, the generator is a three-phase induction machine or a synchronous electrical machine. A synchronous electrical machine may be an electrical machine for which the rotor speed is synchronized with the frequency of the currents.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a drive system according to an embodiment of the invention.
Fig. 2 shows a flow diagram for a method for operation the drive system of Fig. 1.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

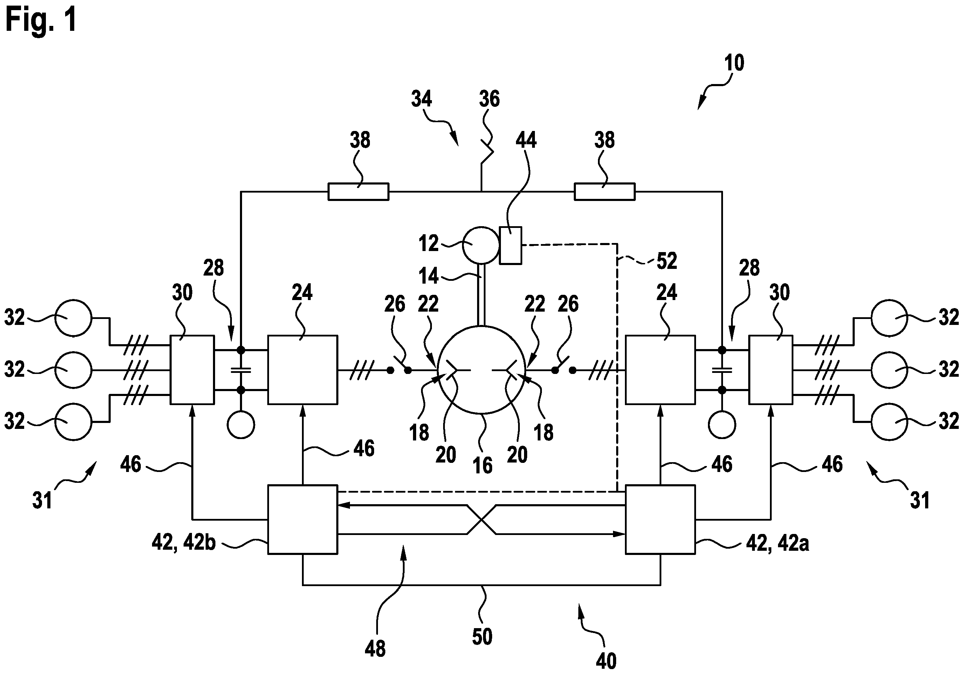

Fig. 1 shows a drive system 10 for a traction vehicle. All the components described in the above and in the below of the drive system may be housed inside a wagon of the traction vehicle, such as a locomotive.

The drive system comprises a fuel powered motor 12, such as a diesel motor, that is mechanically connected via a shaft 14 with an electrical generator 16, which may be a three-phase induction machine or a synchronous machine. The shaft of the fuel powered motor 12 may be directly or indirectly (i.e. via a gear) connected with the rotor of the generator 16, which is rotating within a stator, which comprises two galvanically separated stator winding systems 18.

Each of the stator winding systems 18 comprises a phase winding 20 for each output phase of the generator 16. In the present case, the generator has two three-phase outputs 22 and/or each stator winding system 18 has three phase windings 20. The phase windings 18 are star-connected to form the respective stator winding system 18.

Each of the stator winding systems 18 is connected via one of the outputs 22 of the generator 16 with an inverter 24. A switch 26 may be provided between every output 22 and the respective inverter 24, which switch 26 may be used to disconnect an inverter 24 from the respective output 22. For example, when one of the inverters 24 is not operating properly, only the other inverter 24 may be used for driving the traction vehicle.

Each of the generator side inverters 24 is connected via a DC link 28 with a drive motor side inverter 30, i.e. the drive system 10 has two separate generator side inverters 24, two separate DC links 28 and two separate motor side inverters 30. Each DC link 28 has a capacitor for storing electrical energy in the DC link 28.

A generator side inverter 24, the corresponding DC link 28 and the corresponding drive motor side inverter 30 may be seen as a converter branch 31 of the drive system 10. In Fig. 1, two converter branches 31 are connected to the generator 16. Each converter branch 31 is connected to a stator winding system 18.

Each generator side inverter 24 may be an active rectifier, which converts a variable frequency AC current from the generator 16 into a DC current supplied to the DC link 28. For example, a generator side inverter 24 may be based on half-bridges, which are connected in parallel to the DC link 28.

Each of the drive motor side inverters 30 may be connected to a plurality of drive motors 32, which may be electrically motor adapted for driving the traction vehicle. The drive motors 32 may be mechanically connected to axles and/or wheels of the traction vehicle. The DC voltage from the DC link 28 may be converted by the respective motor side inverter 30 into a plurality of three-phase AC currents for the drive motors 32. Also each drive motor side inverter 30 may be based on half-bridges connected in parallel to the respective DC link 28.

The traction vehicle may be a hybrid vehicle, i.e. may be powered by the fuel powered motor 12 and by an external electrical network 34, which provides a DC voltage to the traction vehicle. For example, the traction vehicle may be electrically connected to the electrical network 34 via a catenary line 36. The DC voltage from the electrical network 34 may be supplied directly to the DC links 28. Each DC link 28 may be directly connected to the electrical network 34, for example via a filtering inductor 38 adapted for filtering voltage peaks out of the DC voltage from the electrical network 34.

Fig. 1 also shows the control system 40 of the drive system 10, which control system 40 comprises two inverter controllers 42 and a motor controller 44.

The inverter controllers 42 may be equally designed and/or may contain the same software. Each inverter controller 42 is associated with one of the converter branches of the drive system 10, i.e. a generator side inverter 24, the corresponding DC link 28 and the corresponding drive motor side inverter 30. The inverter controller 42 may generate the switching signals 46 for the generator side inverter 24 and the drive motor side inverter 30.

The inverter controllers 42 may be interconnected by a faster data communication line 48 and by a slower data communication line 50. For example, the data communication line 48 may be based on fibre optics and/or on serial communication channels, which are adapted for transferring data in such a way that the two inverter controllers are adapted for timely synchronizing each other. For example, the two inverter controllers 42 may be adapted for timely synchronizing each other, such that they are adapted for producing synchronic switching signals 46, which may be synchronic up to 20 µs. This may be necessary, since the two inverter branches and in particular the generator side inverters 24 are low inductively coupled by the two stator winding systems 18.

The data communication line 50 may be based on a bus system, such as a CAN bus.

The motor controller 44 may be connected with both controllers 42a and 42b, for example also via a CAN bus as provided by the data communication line 50.

Furthermore, the inverter controllers 42 are adapted for synchronizing each other as a master controller 42a and a slave controller 42b. It may be that every one of the inverter controllers 42 may take the role of the master controller 42a.

The master controller 42a is adapted for evaluating measurement signals from the drive system 10, in particular, voltages and/or currents, such as the DC link voltage of one or both of the DC links 28 and/or the AC currents provided by the generator 16.

The master controller 42a then may determine reference signals for stator voltages for both stator winding systems 18. For example, the reference signals may comprise the magnitude and/or the phase angle of each phase of the stator voltage.

From these reference signals, the switching signals 46 for the inverters 24 may be generated. This may be performed by the respective inverter controller 42.

Furthermore, the reference signals may be sent from the master controller 42a to the slave controller 42b, for example via the data communication line 48 and/or via the data communication line 50.

The slave controller is adapted receiving the reference signals for the stator voltage and for generating switching signals 46 for its corresponding inverter 24.

The motor controller 44 is adapted for controlling an output power of the fuel powered motor 12. For example, the master controller 42a may determine an overall needed power for the whole vehicle and/or for the drive system 10 and may send a reference signal 52 about the needed power and/or a corresponding motor speed to the motor controller 44. The motor controller 44 then sets the speed of the fuel powered motor 12 accordingly. Basically, the needed power may be provided by a superordinated control system, which is responsible for setting the speed and/or the tractive effort of the traction vehicle.

It may be that the traction vehicle is powered by the electrical network 34 alone. In this case, the fuel powered motor 12 may be stopped and/or the inverters 24 may be switched into a mode, in which they block any power transfer between the generator 16 and the corresponding DC link 28.

It also may be that the traction vehicle is powered alone by the fuel powered motor 12, which may be the case, when the electrical network 34 is down or the traction vehicle is not connected to the electrical network.

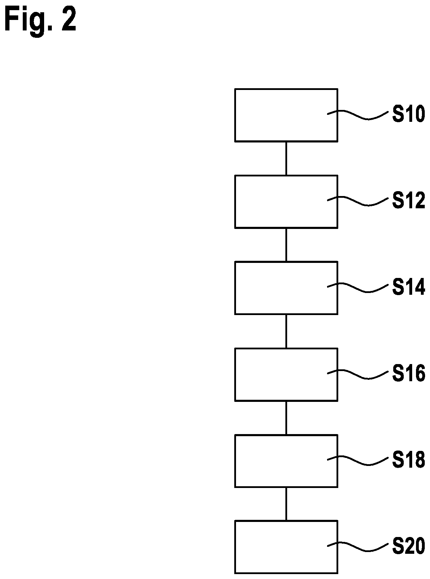

It also may be that the traction vehicle is powered by both of the electrical DC network 34 and the fuel powered motor 12. In this case, the power from the electrical network 34 may be supplemented with power from the fuel powered motor 12. Such a method, in which the drive system 10 is powered by both the DC network 34 and the fuel powered motor 12, is described with respect to Fig. 2.

Fig. 2 shows a method for operating a drive system, such as a drive system 10 as shown in Fig. 1.

It has to be noted that the method also may be performed with a drive system that has a different converter topology. For example, the drive system may comprise only one converter branch 31.

Furthermore, it may be possible that each converter branch 31 is supplied with a separate combination of fuel powered motor 12 and generator 16, i.e. the drive system may comprise two (or more) fuel powered motors 12, which drive two (or more) generators 16.

Additionally, it may be that the two generator side converters 24 are interconnected with the same DC link 28 and/or that more than one drive side inverter 30 are connected to this DC link 28 or to the DC links of Fig. 1.

In step S10, the control system 40 determines a reference power to be provided to the drive motors 32. The reference power may be the power that should be provided to drive motors 32 in the moment. The reference power may change over time and/or may depend on an actual speed of the traction vehicle, an actual acceleration of the traction vehicle and other parameters. In particular, the reference power may be based on a signal from a human controllable speed controller of the traction vehicle. For example, the human controllable speed controller may be a lever in the driver's cabin and the reference power may be set with this lever.

It has to be noted that in this step and the following steps, when the control system 40 is mentioned, the method may be performed by the master controller 42a.

In step S12, the control system 40 determines an actual DC network power provided by the DC network 34. For example, the voltage of the DC network may be regularly measured. Usually, a deviation of the DC network voltage from a rated voltage indicates that too much power is drawn from the DC network. This deviation may be used for determining an actual power that may be drawn from the DC network 34.

In step S14, the control system 40 determines, whether the actual DC network power is smaller than the reference power. In this case, some of the drive power of the traction vehicle should be provided by the fuel powered motor 12. For example, a difference power, being the difference between the reference power and the actual DC network power, may be compared with 0.

When the actual DC network power is higher or equal to the reference power for the drive motors 32, the fuel powered motor 12 may be stopped. However, it also may be possible that the fuel powered motor 12 is kept running in an idle mode, such that it has not to be started again. For example, the stopping of the fuel powered motor 12 may be triggered by a time interval, in which the difference power stays negative.

In step S16, when the fuel powered motor 12 is stopped, the fuel powered motor 12 is started by the control system 40.

The fuel powered motor 12 may be started by the generator 16 without the need for an additional start-up system. For example, the fuel powered motor 12 may be started with the generator 16 by supplying the generator 16 with an AC current from one of both of the generator side inverters 24.

It may be that one or both of the DC links 28 are charged from the electrical DC network 34 before starting the fuel powered motor 12. One or both of the DC links 28 may be loaded with the aid of the electrical DC network 34 and one or both inverters 24 may be controlled to transfer power from the DC link(s) to the generator 16. The generator 16 may then operate in motor mode and may turn the fuel powered motor 12 until it starts.

When the actual DC network power is smaller than the reference power, the difference power should be provided by the fuel power motor 12.

In step S18, to this end, the control system controls the fuel powered motor 12, such that a difference power is provided by the generator 16.

The control system 40 may set a reference motor power for the fuel powered motor 12 as the difference power. Such a reference motor power or a corresponding speed reference may be transmitted to the motor controller 44.

In step S20, the control system 40 determines an actual present power as the sum of the actual DC network power and an actual motor power provided by the fuel powered motor 12. It may be that the actual present power, which is provided to the DC link(s) 28, is not equal to the reference power, for example, because the fuel powered motor 12 needs some time to speed up.

The actual present power may be determined by the control system 40 based on a DC link voltage and/or an AC voltage provided by the generator 16. In general, the change of the voltage of a DC link 28 may indicate, whether too much energy is drawn from the DC link 28.

The control system 40 may control the drive motor side inverter(s) 30, such that the actual present power is supplied to the drive motors 32. In such a way, a slower reaction of the fuel powered motor 12 may be balanced.

While the invention has been illustrated and described in detail in the drawings and foregoing description, such illustration and description are to be considered illustrative or exemplary and not restrictive; the invention is only defined by the appended claims.

### LIST OF REFERENCE SYMBOLS

- 10: drive system
- 12: fuel powered motor
- 14: shaft
- 16: electrical generator
- 18: stator winding system
- 20: phase winding
- 22: outputs
- 24: generator side inverter
- 26: switch
- 28: DC link
- 30: drive motor side inverter
- 31: converter branch
- 32: drive motor
- 34: electrical DC network
- 36: catenary line
- 38: filtering inductor
- 40: control system
- 42: inverter controller
- 42a: master controller
- 42b: slave controller
- 44: motor controller
- 46: switching signals
- 48: faster data communication line
- 50: slower data communication line
- 52: power reference signal

## Claims

1. A method for operating a drive system (10) of a traction vehicle,
wherein the drive system (10) comprises a generator (16), which is driven by a fuel powered motor (12) and which comprises two galvanically separated stator winding systems (18);
wherein the drive system (10) comprises two converter branches (31) supplied by the generator (16);
wherein each converter branch (31) comprises a generator side inverter (24) supplied by one of the stator winding systems (18), a DC link (28) and a drive motor side inverter (30) connected to the DC link (28) supplying at least one drive motor (32), wherein the DC link (28) is directly connectable with an electrical DC network (34) for supplying the traction vehicle,
the method comprising:
determining a reference power to be provided to the at least one drive motor (32);
determining an actual DC network power provided by the DC network (34);
in the case, the actual DC network power is smaller than the reference power: controlling the fuel powered motor (12), such that a difference power is provided by the generator (16);
automatically balancing the power from the fuel powered motor (12) between the two converter branches (31) with the two inductively coupled stator winding systems (18) of the generator (16), to which the converter branches (31) are connected.

2. The method of claim 1, further comprising:
determining an actual present power as the sum of the actual DC network power and an actual motor power provided by the fuel powered motor (12);
controlling the drive motor side inverter (30) such that the actual present power is supplied to the at least one drive motor (32).

3. The method of claim 1 or 2,
wherein the actual present power is determined based on a DC link voltage and/or an AC voltage provided by the generator (16).

4. The method of one of the preceding claims, further comprising:
setting a reference motor power for the fuel powered motor (12) as the difference power, which is the difference between the reference power and the actual DC network power.

5. The method of one of the preceding claims,
wherein the reference power is based on a human controllable speed controller of the traction vehicle.

6. The method of one of the preceding claims, further comprising:
starting the fuel powered motor (12) with the generator (16), which is supplied with an AC current via the generator side inverter (24).

7. The method of claim 6,
charging the DC link (28) from the electrical DC network (34) before starting the fuel powered motor (12).

8. A control system (40) for a drive system (10) of a traction vehicle, the control system (40) being adapted for performing the method of one of the previous claims.

9. A drive system (10) for a traction vehicle, the drive system (10) comprising:
a fuel powered motor (12);
a generator (16) driven by the fuel powered motor (12), the generator (16) being adapted for generating a multi-phase AC current, when driven by the fuel powered motor (12), and the generator (16) comprising two galvanically separated stator winding systems (18);
two converter branches (31), each converter branch (31) supplied by one of the stator winding systems (18);
wherein each converter branch comprises a generator side inverter (24) supplied by the generator (16), a drive motor side inverter (30) supplying at least one drive motor (32) of the traction vehicle, and a DC link (28) interconnecting the generator side inverter (24) and the drive motor side inverter (30), wherein the DC link (28) is directly connectable with an electrical DC network (34) for supplying the traction vehicle;
wherein the drive system (10) comprises a control system (40) according to claim 8.

10. The drive system (10) of claim 9,
wherein each stator winding system (18) of the generator (16) has three phases, which are star-connected.

11. The drive system (10) of claim 9 or 10,
wherein the two stator winding systems (18) have an electrical angle of 30° with respect to each other.

12. The drive system (10) of one of claims 9 to 11,
wherein the fuel powered motor (12) is a diesel motor; and/or
wherein the generator (16) is a three-phase induction machine or a synchronous electrical machine.

## Patentansprüche

1. Verfahren zum Betreiben eines Antriebssystems (10) einer Zugmaschine,
wobei das Antriebssystem (10) einen Generator (16) umfasst, der durch einen kraftstoffbetriebenen Motor (12) angetrieben wird und der zwei galvanisch getrennte Statorwicklungssysteme (18) umfasst;
wobei das Antriebssystem (10) zwei Umrichterzweige (31) umfasst, die durch den Generator (16) versorgt werden;
wobei jeder Umrichterzweig (31) einen generatorseitigen Wechselrichter (24), der durch eines der Statorwicklungssysteme (18) versorgt wird, einen Gleichstromzwischenkreis (28) und einen antriebsmotorseitigen Wechselrichter (30), der mit dem Gleichstromzwischenkreis (28) verbunden ist, wobei er mindestens einen Antriebsmotor (32) versorgt, umfasst, wobei der Gleichstromzwischenkreis (28) zum Versorgen der Zugmaschine direkt mit einem elektrischen Gleichstromnetz (34) verbunden werden kann,
wobei das Verfahren Folgendes umfasst:
Bestimmen einer Referenzleistung, die für den mindestens einen Antriebsmotor (32) bereitgestellt werden soll;
Bestimmen einer tatsächlichen Gleichstromnetzleistung, die durch das Gleichstromnetz (34) bereitgestellt wird;
Steuern des kraftstoffbetriebenen Motors (12) dann, wenn die tatsächliche Gleichstromnetzleistung kleiner als die Referenzleistung ist, derart, dass durch den Generator (16) eine Differenzleistung bereitgestellt wird;
automatisches Ausgleichen der Leistung von dem kraftstoffbetriebenen Motor (12) zwischen den zwei Umrichterzweigen (31) mit den zwei induktiv gekoppelten Statorwicklungssystemen (18) des Generators (16), mit denen die Umrichterzweige (31) verbunden sind.

2. Verfahren nach Anspruch 1, das ferner Folgendes umfasst:
Bestimmen einer tatsächlich vorhandenen Leistung als die Summe der tatsächlichen Gleichstromnetzleistung und einer tatsächlichen Motorleistung, die durch den kraftstoffbetriebenen Motor (12) bereitgestellt wird;
Steuern des antriebsmotorseitigen Wechselrichters (30), derart, das die tatsächlich vorhandene Leistung dem mindestens einen Antriebsmotor (32) zugeführt wird.

3. Verfahren nach Anspruch 1 oder 2,
wobei die tatsächlich vorhandene Leistung auf der Grundlage einer Spannung des Gleichstromzwischenkreises und/oder einer Wechselspannung, die durch den Generator (16) bereitgestellt wird, bestimmt wird.

4. Verfahren nach einem der vorhergehenden Ansprüche, das ferner Folgendes umfasst:
Einstellen einer Referenzmotorleistung für den kraftstoffbetriebenen Motor (12) als die Differenzleistung, die die Differenz zwischen der Referenzleistung und der tatsächlichen Gleichstromnetzleistung ist.

5. Verfahren nach einem der vorhergehenden Ansprüche,
wobei die Referenzleistung auf einer durch eine Person steuerbaren Geschwindigkeitssteuereinheit der Zugmaschine beruht.

6. Verfahren nach einem der vorhergehenden Ansprüche, das ferner Folgendes umfasst:
Starten des kraftstoffbetriebenen Motors (12) mit dem Generator (16), der über den generatorseitigen Wechselrichter (24) mit einem Wechselstrom versorgt wird.

7. Verfahren nach Anspruch 6,
Aufladen des Gleichstromzwischenkreises (28) aus dem elektrischen Gleichstromnetz (34), bevor der kraftstoffbetriebene Motor (12) gestartet wird.

8. Steuersystem (40) für ein Antriebssystem (10) einer Zugmaschine, wobei das Steuersystem (40) zum Durchführen des Verfahrens nach einem der vorhergehenden Ansprüche ausgelegt ist.

9. Antriebssystem (10) für eine Zugmaschine, wobei das Antriebssystem (10) Folgendes umfasst:
einen kraftstoffbetriebenen Motor (12);
einen Generator (16), der durch den kraftstoffbetriebenen Motor (12) angetrieben wird, wobei der Generator (16) ausgelegt ist, einen Mehrphasen-Wechselstrom zu erzeugen, wenn er durch den kraftstoffbetriebenen Motor (12) angetrieben wird, und der Generator (16) zwei galvanisch getrennte Statorwicklungssysteme (18) umfasst;
zwei Umrichterzweige (31), wobei jeder Umrichterzweig (31) durch eines der Statorwicklungssysteme (18) versorgt wird;
wobei jeder Umrichterzweig einen generatorseitigen Wechselrichter (24), der durch den Generator (16) versorgt wird, einen antriebsmotorseitigen Wechselrichter (30), der mindestens einen Antriebsmotor (32) der Zugmaschine versorgt, und einen Gleichstromzwischenkreis (28), die den gleichstromseitigen Wechselrichter (24) und den antriebsmotorseitigen Wechselrichter (30) koppelt, umfasst, wobei der Gleichstromzwischenkreis (28) zum Versorgen der Zugmaschine direkt mit einem elektrischen Gleichstromnetz (34) verbunden werden kann;
wobei das Antriebssystem (10) ein Steuersystem (40) nach Anspruch 8 umfasst.

10. Antriebssystem (10) nach Anspruch 9,
wobei jedes Statorwicklungssystem (18) des Generators (16) drei Phasen aufweist, die sternförmig verbunden sind.

11. Antriebssystem (10) nach Anspruch 9 oder 10,
wobei die zwei Statorwicklungssysteme (18) zueinander einen elektrischen Winkel von 30° aufweisen.

12. Antriebssystem (10) nach einem der Ansprüche 9 bis 11,
wobei der kraftstoffbetriebene Motor (12) ein Dieselmotor ist; und/oder
wobei der Generator (16) eine Dreiphasen-Induktionsmaschine oder eine elektrische Synchronmaschine ist.

## Revendications

1. Procédé de fonctionnement d'un système d'entraînement (10) d'un véhicule de traction,
dans lequel le système d'entraînement (10) comprend un générateur (16), qui est entraîné par un moteur à combustible (12) et qui comprend deux systèmes d'enroulement de stator à séparation galvanique (18) ;
dans lequel le système d'entraînement (10) comprend deux branches de convertisseur (31) alimentées par le générateur (16) ;
dans lequel chaque branche de convertisseur (31) comprend un onduleur côté générateur (24) alimenté par l'un des systèmes d'enroulement de stator (18), une liaison CC (28) et un onduleur côté moteur d'entraînement (30) connecté à la liaison CC (28) alimentant au moins un moteur d'entraînement (32), dans lequel la liaison CC (28) peut être connectée directement à un réseau CC électrique (34) pour alimenter le véhicule de traction,
le procédé comprenant :
la détermination d'une puissance de référence à fournir à l'au moins un moteur d'entraînement (32) ;
la détermination d'une puissance de réseau CC réelle fournie par le réseau CC (34) ;
dans le cas où la puissance de réseau CC réelle est inférieure à la puissance de référence : la commande du moteur à combustible (12), de façon à ce que le générateur (16) fournisse une puissance de différence ;
l'équilibrage automatique de la puissance du moteur à combustible (12) entre les deux branches de convertisseur (31) avec les deux systèmes d'enroulement de stator à couplage inductif (18) du générateur (16) auxquels les branches de convertisseur (31) sont connectées.

2. Procédé selon la revendication 1, comprenant en outre :
la détermination d'une puissance présente réelle en tant que somme de la puissance de réseau CC réelle et d'une puissance de moteur réelle fournie par le moteur à combustible (12) ;
la commande de l'onduleur du côté moteur d'entraînement (30) afin que la puissance présente réelle soit fournie à l'au moins un moteur d'entraînement (32).

3. Procédé selon la revendication 1 ou 2,
dans lequel la puissance présente réelle est déterminée sur la base d'une tension de liaison CC et/ou d'une tension CA fournie par le générateur (16).

4. Procédé selon l'une quelconque des revendications précédentes, comprenant en outre :
le réglage d'une puissance de moteur de référence pour le moteur à combustible (12) en tant que la puissance de différence, qui est la différence entre la puissance de référence et la puissance de réseau CC réelle.

5. Procédé selon l'une quelconque des revendications précédentes,
dans lequel la puissance de référence est basée sur un contrôleur de vitesse pouvant être commandé par un humain du véhicule de traction.

6. Procédé selon l'une quelconque des revendications précédentes, comprenant en outre :
le démarrage du moteur à combustible (12) avec le générateur (16), qui est alimenté en courant CA par le biais de l'onduleur du côté générateur (24).

7. Procédé selon la revendication 6,
comprenant la charge de la liaison CC (28) depuis le réseau CC électrique (34) avant le démarrage du moteur à combustible (12).

8. Système de commande (40) pour un système d'entraînement (10) d'un véhicule de traction, le système de commande (40) étant conçu pour exécuter le procédé selon l'une des revendications précédentes.

9. Système d'entraînement (10) pour un véhicule de traction, le système d'entraînement (10) comprenant :
un moteur à combustible (12) ;
un générateur (16) entraîné par le moteur à combustible (12), le générateur (16) étant conçu pour générer un courant CA multiphase lorsqu'il est entraîné par le moteur à combustible (12), et le générateur (16) comprenant deux systèmes d'enroulement de stator à séparation galvanique (18) ;
deux branches de convertisseur (31), chaque branche de convertisseur (31) étant alimentée par l'un des systèmes d'enroulement de stator (18) ;
dans lequel chaque branche de convertisseur comprend un onduleur côté générateur (24) alimenté par le générateur (16), un onduleur côté moteur d'entraînement (30) alimentant au moins un moteur d'entraînement (32) du véhicule de traction, et une liaison CC (28) interconnectant l'onduleur du côté générateur (24) et l'onduleur du côté moteur d'entraînement (30), dans lequel la liaison CC (28) peut être connectée directement à un réseau CC électrique (34) pour alimenter le véhicule de traction ;
dans lequel le système d'entraînement (10) comprend un système de commande (40) selon la revendication 8.

10. Système d'entraînement (10) selon la revendication 9,
dans lequel chaque système d'enroulement de stator (18) du générateur (16) a trois phases, qui sont connectées en étoile.

11. Système d'entraînement (10) selon la revendication 9 ou 10,
dans lequel les deux systèmes d'enroulement de stator (18) ont un angle électrique de 30° l'un par rapport à l'autre.

12. Système d'entraînement (10) selon l'une des revendications 9 à 11,
dans lequel le moteur à combustible (12) est un moteur diesel ; et/ou
dans lequel le générateur (16) est une machine à induction triphasée ou une machine électrique synchrone.
